# EUROPÄISCHE PATENTANMELDUNG

(11) **EP 1 688 175 A1**
(43) Veröffentlichungstag der Anmeldung: **09.08.2006**
(21) Anmeldenummer: 06001967.6
(22) Anmeldetag: 31.01.2006
(51) Int. Cl.: B01D 65/00, B01D 63/06, B01D 63/02, B29C 65/02, B29C 65/00, B29C 65/20

(54) **Verfahren zum Verbinden poröser Membranen sowie hierdurch erzeugte Membranfiltervorrichtung**

(30) Priorität: 31.01.2005 DE 102005004372
(71) Anmelder: Wat-membratec GmbH & Co. KG, 40699 Erkrath (DE)
(72) Erfinder: Haake, Axel, 40699 Erkrath (DE)
(74) Vertreter: HOFFMANN EITLE

(57) **Zusammenfassung**

Das Verfahren zum Verbinden einer porösen Membran, die einen inneren Hohlraum umschließt, mit einem massiven Bauteil, umfasst folgende Schritte: zunächst wird an einen oder beide Endbereiche der Membran ein schmelzbares, massives Material (12) angeformt, wobei eine Premembran (14) hergestellt wird. Anschließend wird die Premembran in eine Durchgangsöffnung des ebenfalls aus einem schmelzbaren Material bestehenden massiven Bauteils (18) eingeführt, so dass die Stirnseite der Premembran bündig mit dem massiven Bauteil abschließt. Abschließend erfolgt ein Verschweißen der Premembran mit dem massiven Bauteil.

## Beschreibung

### Gebiet der Erfindung

Die Erfindung betrifft ein Verfahren zum Verbinden von porösen Membranen, die einen inneren Hohlraum umschließen, sowie eine Membranfiltervorrichtung.

Im Bereich der Chemie und insbesondere in der Umwelttechnik wird häufig eine Membranfiltration verwendet. Wesentliche Anwendungsfelder der Membranfiltration liegen hierbei in der Abwasserreinigung, bei der eine physikalische Abtrennung oder Aufkonzentrierung gelöster Substanzen aufgrund der unterschiedlichen Permeabilität der Membran für einzelne Substanzen erfolgt. Durch die Wahl eines geeigneten Membranverfahrens, z.B. Mikrofiltration, Ultrafiltration, Nanofiltration oder Umkehrosmose, kann eine Anpassung an verschiedene Trennaufgaben erfolgen. Anwendungsbeispiele in der Abwassertechnik sind insbesondere die Konzentrierung von Öl/Wasser-Emulsionen, die Rückgewinnung von Farbstoffen und Schlichte aus Textilabwässern, die Reinigung von Druckereiabwässern, Rückgewinnung von Farbstoffen aus der Papierbeschichtung, Konzentrierung von Deponiesickerwässern und die Nachreinigung von Brüdenkondensaten.

In technischen Filtrationsanlagen werden häufig Rohrmembranen eingesetzt, die Porenfeinheiten im Bereich unter einem Mikrometer besitzen und sowohl als feine Kapillaren als auch Rohre eingesetzt werden.

### Stand der Technik

Im technischen Maßstab bei der Bewältigung erheblicher Volumenströme an zu reinigenden Flüssigkeiten müssen eine Vielzahl einzelner Rohrmembranen in einer Filtervorrichtung angeordnet werden. Hierbei ist auch darauf zu achten, dass die zu reinigende Flüssigkeit und die durch die Membranen gereinigte Flüssigkeit dicht voneinander getrennt sind. Daher ist es erforderlich, Rohrmembranen dicht sowie fest mit Lochböden zum Einsatz in einem Filtrationsbehälter zu verbinden.

In der Technik sind mehrere Verfahren bekannt, um eine entsprechende Verbindung zwischen porösen Membranen und massiven Bauteilen herzustellen.

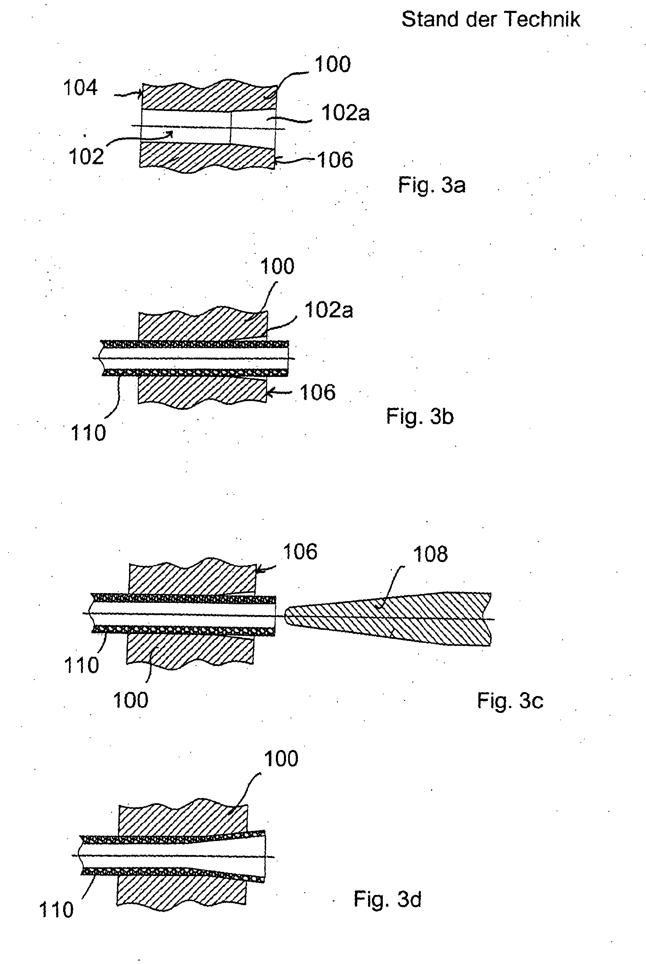

Bei der Verklemmungstechnik für poröse Rohrmembranen erfolgt das Einführen eines abgelängten Rohrmembranstücks in einen Lochboden, das Aufweiten der Rohrmembran und das Verklemmen der Rohrmembran. Abschließend wird der Überstand der Rohrmembran über dem Lochboden entfernt. Figuren 3a bis 3g geben die aus dem Stand bekannte Verklemmungstechnik für poröse Rohrmembranen in den hierbei bekannten, aufeinanderfolgenden Schritten wieder.

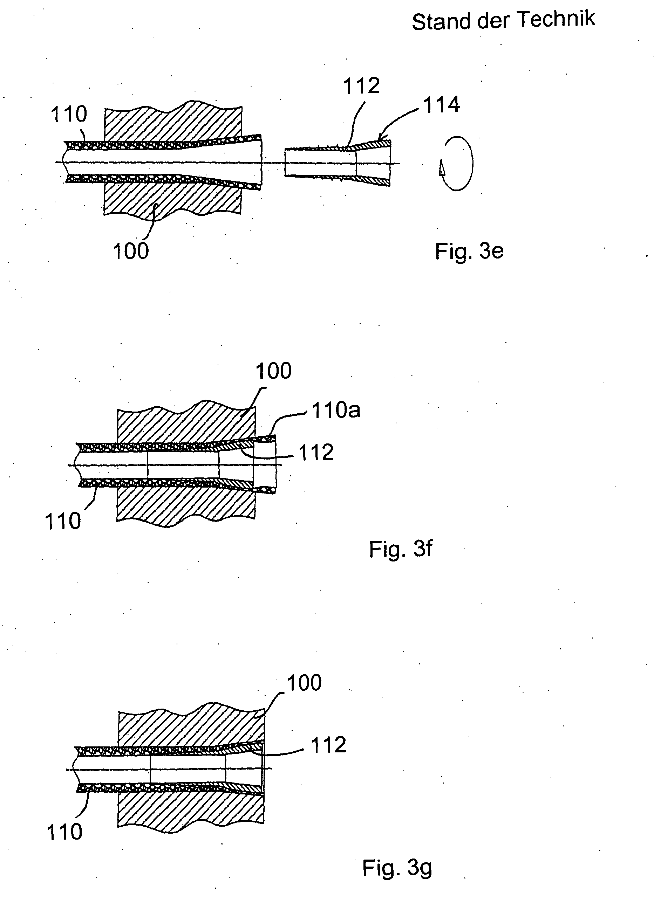

Fig. 3a zeigt eine Lochplatte 100 mit einer Bohrung 102, die sich als Durchgangsbohrung von der ersten Hauptfläche 104 zur zweiten Hauptfläche 106 der Lochplatte 100 erstreckt. Die Bohrung weist einen aufgeweiteten Bereich 102a auf, im Bereich dessen der Radius der Bohrung zur zweiten Hauptfläche 106 hin zunimmt. In eine so vorbereitete Lochplatte 100 wird eine Rohrmembran von der ersten Hauptfläche 104 her durch die Bohrung 102 durchgeschoben und erstreckt sich einen gewissen Überstand über die zweite Hauptfläche 106 hinaus. Der geringste Durchmesser der Bohrung 102 ist so auf den Außendurchmesser der Rohrmembran abgestimmt, dass die Rohrmembran 110 durch eine Presspassung fest in der Lochplatte gehalten ist. Dieser Zustand im Verfahrensablauf ist in Fig. 3b dargestellt. Anschließend wird gemäß Fig. 3c mit Hilfe eines beheizten Aufweitungsdorns die eingezogene Membran 110 aufgeweitet. Nach dem Aufweiten entsteht gemäß Fig. 3d ein Konus in der eingezogenen Membran 110, in den eine Klemmhülse 112 gemäß Fig. 3e eingeschraubt werden kann. Auf der Klemmhülse ist ein ansteigendes, spitzes Gewinde angebracht, welches das Verrutschen der Membran 110 im Lochboden 100 beim Einschrauben verhindert. Im hinteren Bereich ist die Klemmhülse 112 bauchig entsprechend Referenzziffer 114 ausgeführt, um eine Verpressung zu erreichen. Durch das Einschrauben der Klemmhülse mit dem bauchig ausgeführten Bereich 114 wird die Membran 110 an die Wand des Lochbodens im Bereich des aufgeweiteten Bereichs 102e gequetscht. Durch dieses Einquetschen wird die Membran gemäß Fig. 3f abgedichtet. Abschließend erfolgt das Abtrennen des Überstandes 110a, um die in Fig. 3g dargestellte verklemmte Verbindung unter Verwendung einer Klemmhülse herzustellen.

Für die bei der anhand der Fig. 3a bis 3g beschriebenen Verklemmungstechnik verwendeten Hülsen können sowohl Hülsen aus Edelstahlmaterialien wie auch Kunststoff eingesetzt werden. Es wird auf jeden Fall vollständig auf eine Verschweißung verzichtet, so dass sich Schwierigkeiten bei der Anwendung von Rohrmembranen unter druck- und temperaturrelevanten Bedingungen ergeben können.

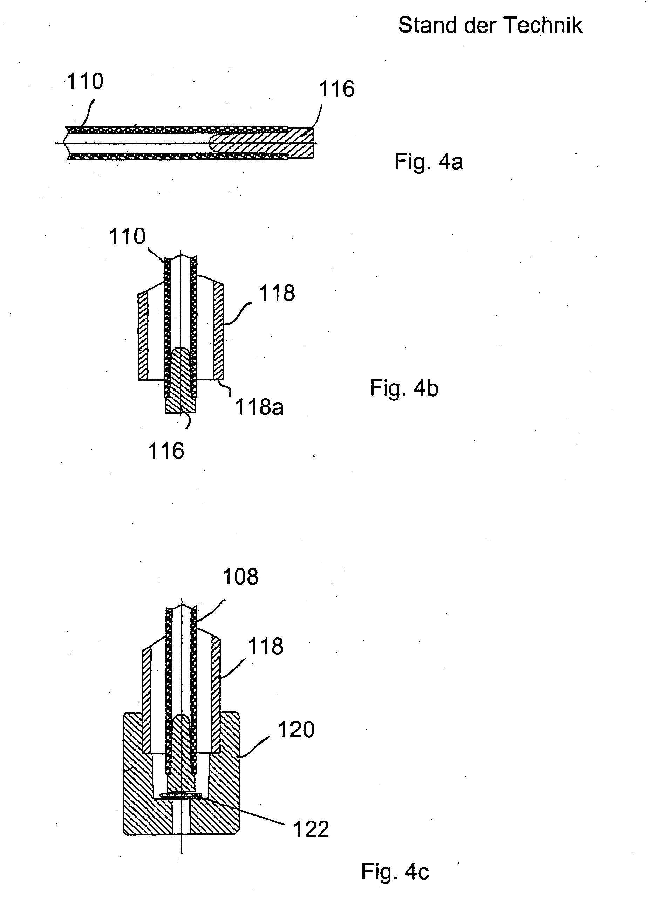

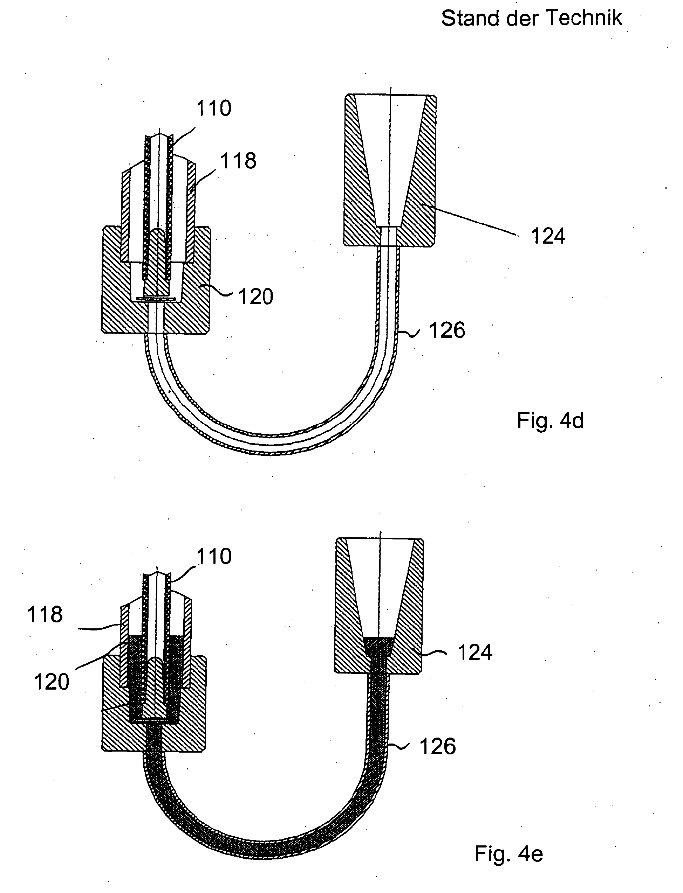

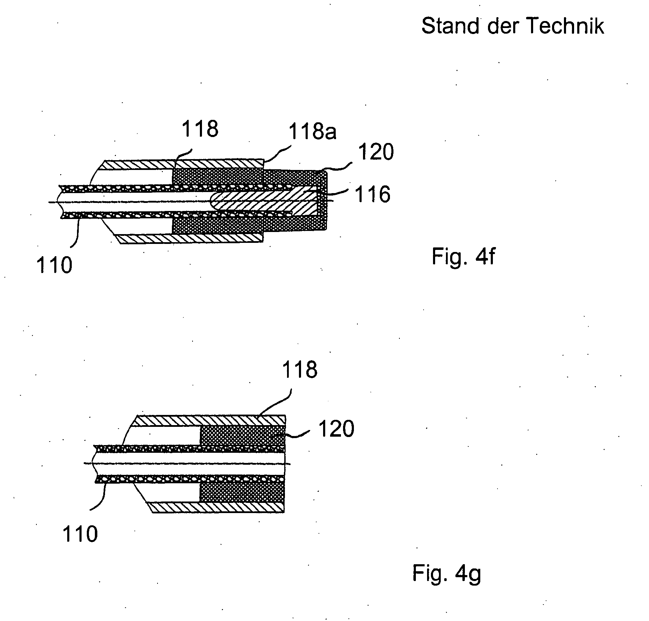

Eine weitere bekannte Technik für die Verbindung einer hochporösen Rohrmembran mit einem Modulgehäuse ist eine als Verpotten bezeichnete Vergusstechnik. Der entsprechende Verfahrensablauf des Verpottens ist in den Fig. 4a bis 4g dargestellt. Ein abgelängtes Membranende 108 wird dabei mit einem weichen Stopfen 116, der das Eindringen von Gießharz in das Lumen des Membranrohres 108 verhindert, verschlossen. Das Membranende mit eingesetzten Stopfen 116 ist in Fig. 4b dargestellt. Anschließend wird gemäß Fig. 4d das verschlossene Membranrohr 110, 116 in ein Modulrohr 118 eingeführt und mit einem Überstand gemäß Fig. 4b über das stirnseitige Ende 118a des Modulrohres hinaus positioniert. Das Modulrohr 118 ist im Innenbereich aufgerauht und entfettet, um eine gute Haftvermittlung zu erzielen. Die aus Rohrmembran 110, Stopfen 116 und Modulraum 118 bestehende Einheit wird nun in eine Vergussform 120 eingebracht. Unter die Membran wird ein Distanznetz 122 eingelegt, um eine bessere Verteilung des Gießharzes zu erreichen. Die in eine Vergussform eingebrachte Einheit ist in Fig. 4c dargestellt. Gemäß Fig. 4d wird anschließend an den Vergusstopf 120 eine Gießharzvorlage 124 mit einem Schlauch 126 angeschlossen und gemäß Fig. 4e nach dem Einfüllen von Gießharz in den Vorlagebehälter das Gießharz in den Zwischenraum zwischen Modulrohr 118 und Rohrmembran 110 eingefüllt. Über die Lage des Vorlagebehälters oder den Füllstand des Harzes im Vorlagebehälter kann der Füllstand im Modulrohr kontrolliert werden. Nach dem Aushärten des Gießharzes wird die Moduleinheit gemäß Fig. 4f entformt und in einem letzten Schritt der über die Stirnseite 118a überstehende Vergussüberstand aus Vergussmasse 120 und Rohrmembran 110 sowie der Stopfen 116 entfernt, so dass die in Fig. 4g dargestellte dichte und feste Verbindung zwischen einer hochporösen Rohrmembran 110 und einem Modulrohr 118 unter Verwendung eines Gießharzes 120 entsteht.

Ein weiteres Verfahren zum Verschweißen von Rohrenden mit einem Rohrboden ist aus der EP 0 299 182 B1 bekannt. Bei dem hierin beschriebenen Verfahren werden die Rohrenden in Bohrungen des Rohrbodens so eingeführt, dass sie den Rohrboden geringfügig überragen. Anschließend werden die Rohrenden bei Schweißtemperatur verformt, wobei zunächst nur die Rohrenden zu Schmelze verschmolzen werden und anschließend die Schmelze radial nach Außen geführt wird, so dass die Schmelze teilweise auf der Stirnseite des Rohrbodens aufliegt und teilweise mit dem noch nicht verschmolzenen porösen Rohrende in Verbindung steht. Anschließend wird unter Gewährleistung des Schmelzezustandes des Rohrendes durch ringförmige Erhitzung des Rohrbodens in demjenigen Umfangsbereich, in dem die Schmelze des Rohrendes auf dem Rohrboden aufliegt, eine Verschweißung zwischen Rohrende und Rohrboden durchgeführt. Damit bei der Verschweißung das Rohrende nicht von innen anschmilzt und nicht zu fließen beginnt, sollte das Schweißwerkzeug auf jeden Fall keinen in das Rohrende hineinragenden Dorn besitzen, weil auf diese Weise dem Innenumfang des porösen Membranrohrs zuviel Wärme zugeführt werden könnte. Anstelle dessen kann ein separater Metallstift vor dem Verschweißen in das Rohrende eingeschoben werden und eine Kühlung von der Rohrinnenseite her während des Schweißvorganges erzeugen.

### Darstellung der Erfindung

Der Erfindung liegt die Aufgabe zugrunde, ein Verfahren vorzuschlagen, das ein einfaches Verbinden von porösen Membranen untereinander oder mit massiven Werkstoffen erlaubt, wobei auch Kombinationen verschiedener polymerer, keramischer und metallischer poröser Formteile untereinander oder mit massiven Werkstoffen möglich sind.

Diese Aufgabe wird durch ein Verfahren mit den Merkmalen des Anspruchs 1 gelöst. Ein Membranfiltermodul, das unter Verwendung des erfindungsgemäßen Verbindungsverfahrens hergestellt ist, wird durch die Merkmale des Anspruchs 14 beschrieben.

Der Erfindung liegt der Gedanke zugrunde, eine poröse Membran, die einen inneren Hohlraum umschließt, zunächst mit einem schmelzbaren, massiven Material zu umgeben, das an der Membran angeformt wird. Die hierdurch hergestellte Premembran, in Form eines auf die benötigte Länge abgelängten Membranstückes mit einem oder zwei umspritzen Endbereichen kann anschließend in eine Durchgangsöffnung eines ebenfalls aus einem schmelzbaren Material bestehenden massiven Bauteils eingeführt werden, wobei die Premembran so in die Durchgangsöffnung eingeschoben wird, dass die Stirnseite der Premembran bündig mit dem massiven Bauteil abschließt. Abweichend zum Stand der Technik muss somit nicht ein genau definierter Überstand eingestellt werden, wodurch sich der Schritt des Einführens der Premembran in die Durchgangsöffnung eines massiven Bauteils, wie einer Lochplatte, deutlich vereinfacht. Abschließend wird die Premembran mit dem massiven Bauteil verschweißt, indem ein Stoffverbund zwischen dem schmelzbaren Material des massiven Bauteils und dem schmelzbaren massiven Material, das im ersten Verfahrensschritt auf die poröse Membran aufgebracht wurde, hergestellt wird.

Das erfindungsgemäße Verfahren ist unkompliziert und insbesondere auch dazu geeignet, unterschiedliche Materialien miteinander zu kombinieren.

Bevorzugte Ausführungsformen folgen aus den übrigen Ansprüchen.

Nach einer bevorzugten Ausführungsform der Erfindung wird im ersten Verfahrensschritt die Außenseite der porösen Membran umspritzt. Dies kann in einer Spritzgießvorrichtung erfolgen. Beim Umspritzen wird das schmelzbare Material so auf die Außenseite aufgebracht, dass es teilweise in die Porenöffnungen der Membran eindringen kann und somit einen festen Verbund mit der Membran herstellen kann.

Die vorzugsweise als Rohrmembranen gebildeten Membranen weisen nach einer bevorzugten Ausführungsform ein Porenvolumen von mindestens 20% des Wandvolumens auf. Hierfür geeignete Rohrmembranen sind beispielsweise als Polypropylenmembran auf dem Markt erhältlich und sind selbsttragende Membrankörper mit Porenfeinheiten von 0,1 und 0,2 µm.

Nach einer bevorzugten Ausführungsform wird beim Verfahrensschritt des Verschweißens der Premembran mit dem massiven Bauteil eine Schweißvorrichtung eingesetzt, umfassend einen Stift aus wärmeisolierendem Material, der dimensioniert ist, um von der Stirnseite der Premembran in den Hohlraum der Premembran eingeführt zu werden, sowie einen erhitzbaren Schweißkopf, der sich ringförmig um den Stift herum erstreckt. Eine derartige Schweißvorrichtung besitzt den Vorteil, dass sie sich aufgrund des Stiftes bequem in das Lumen der Premembran einschieben lässt, wobei gleichzeitig eine Zentrierung des Schweißkopfes erfolgt. Indem der Stift aus einem wärmeisolierenden Material besteht, wird vermieden, dass die Membran auf der dem Lumen zugewandten Innenfläche anschmilzt.

Vorzugsweise wird der Schweißkopf auf eine Temperatur erhitzt, die oberhalb der Schmelztemperatur sowohl des im ersten Verfahrensschritts verwendeten schmelzbaren massiven Materials als auch des Materials des massiven Bauteils ist. Auf diese Weise wird eine stoffschlüssige Verbindung zwischen dem für das Umspritzen der Membranenden verwendeten Materials und dem Material des Lochbodens hergestellt.

Der Schweißkopf kann elektrisch oder mit Warmluft beheizbar sein und ist vorzugsweise antiadhäsiv beschichtet, um ein unerwünschtes Anhaften der Schmelze am Schweißkopf zu verhindern.

Nach einer bevorzugten Ausführungsform der Erfindung wird der Schweißkopf mit Druck gegen den Kontaktbereich zwischen der Premembran und dem massiven Bauteil gedrückt. Durch das Aufbringen eines ausreichenden Schweißdrucks wird in der Schweißwurzel und im Kantenbereich zwischen der Premembran und der Schweißnahtschmelze der erforderliche Massedruck im Schweißgut erzeugt.

Ebenfalls bevorzugt ist es, wenn die Schweißvorrichtung zwangsrotierbar ausgeführt ist und beim Durchführen des Verschweißens gezielt rotiert wird. Mit dem Abheben und gleichzeitigem leichten Drehen des Schweißkopfes wird eine saubere Schweißnaht erzeugt, so dass ohne Schweißzusatz eine homogene Verbindungsstruktur zwischen den zwei getrennten Thermoplasten entsteht. Auf diese Weise lässt sich auch erreichen, dass keine Nachbehandlung der Schweißnaht erforderlich ist, wodurch sich das Verfahren weiter beschleunigen lässt.

Besonders bevorzugt ist es, wenn die Membran, das für das Umspritzen verwendete Material sowie das massive Bauteil jeweils aus Polypropylen bestehen. Während Polypropylen für Rohrmembrane verwendet wird, kann durch die Verwendung von identischem Ausgangsmaterial für die angeformte Schicht und den Rohrboden jeweils eine besonders sichere und problemlose Verbindung zwischen den einzelnen an der Verbindung beteiligten Komponenten hergestellt werden.

Das erfindungsgemäße Verfahren mündet bei wiederholter Anwendung in ein Membranfiltermodul mit einer Vielzahl von porösen Rohrmembranen zwischen Lochböden, wobei an den Rohrenden jeweils entsprechend dem erfindungsgemäßen Verfahren massives Material angespritzt umspritzt ist und eine stoffschlüssige Verbindung zu den Lochböden hergestellt ist.

### Kurze Beschreibung der Figuren

In den nachfolgend beschriebenen Figuren zeigen:
- Fig. 1a bis Fig. 1g: schematisch die einzelnen Verfahrensschritte beim Verbinden einer porösen Rohrmembran mit einer Lochplatte;
- Fig. 2: die beim Verfahrensablauf nach Fig. 1 entstehende Schweißnaht;
- Fig. 3a bis Fig. 3g: die im Stand der Technik bekannte Verklemmungstechnik für poröse Rohrmembranen; und
- Fig. 4a bis Fig. 4g: die Verfahrensschritte der im Stand der Technik bekannten Vergusstechnik (Verpotten) für poröse Rohrmembranen.

### Wege zur Ausführung der Erfindung

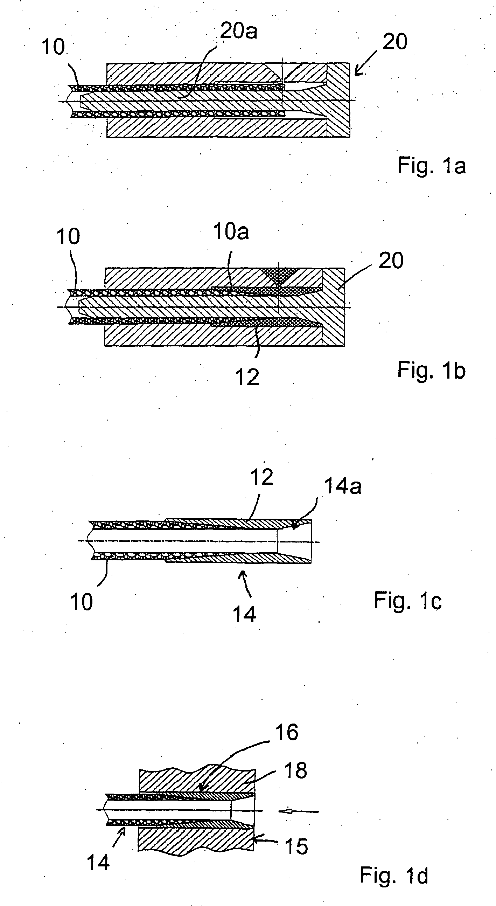

Für die nachfolgende Beschreibung der erfindungsgemäßen Verbindungstechnik wird auf die Abfolge der Figuren 1a bis 1g Bezug genommen. Gleiche Referenzziffern in den jeweiligen Figuren bezeichnen hierbei dieselben Elemente, die bei der Beschreibung nachfolgender Figuren nicht mehr gesondert diskutiert werden.

Für eine Verbindung zwischen einer hochporösen Membran mit einem Lockboden oder einem anderen Bauteil aus einem massiven Material wird zunächst eine geeignete Membran ausgewählt und entsprechend der Geometrie des Filtrationsgerätes auf eine passende Länge abgelängt. Die passende Länge wird nach der nachfolgenden Beschreibung des Verbindungsverfahrens deutlich sein. Das nachfolgende Verbindungsverfahren wird am Beispiel einer porösen Rohrmembran erläutert, doch können andere Membranelemente in gleicher Weise verwendet werden, sofern diese gestaltet sind, dass eine geschlossene Mantelfläche aus porösem Material einen inneren Hohlraum (Lumen) umgibt. Unter der Bezeichnung poröse Rohrmembran wird eine Membran mit einem Porenvolumen von mindestens 20% des Wandvolumens verstanden.

Da es in der Technik Schwierigkeiten bereitet, derartige poröse Rohrmembranen mit einem massiven Bauteil, wie z.B. einer Lochplatte, zu verbinden, wird im Folgenden die Verbindungstechnik am Beispiel einer derartigen porösen Rohrmembran erläutert werden. Es sollte allerdings deutlich sein, dass die beschriebene Verbindungstechnik nicht auf derartige poröse Rohrmembranen beschränkt ist und insbesondere auch bei der Verbindung von.Bauteilen verwendet werden kann, die aufgrund der verwendeten Materialien nicht miteinander verschweißt werden können, weil sich z.B. die Schmelzpunkte zu weit voneinander unterscheiden oder aber die verwendeten Materialien keinen Stoffschluss miteinander eingehen.

Das Verfahren setzt sich aus zwei Fertigungsschritten zusammen, wobei die Fig. 1a, 1b und 1c die zeitliche Abfolge des ersten Fertigungsschrittes darstellen. In dem ersten Fertigungsschritt werden die Membranenden mit einem geeigneten Material umspritzt. Wird beispielsweise eine Rohrmembran aus Polypropylen eingesetzt, so wird bevorzugt auch Polypropylen für das Umspritzen der Membranenden verwendet. Hierzu wird das Ende der in Fig. 1a dargestellten Membran 10 in eine Spritzgussform 20 eingeschoben. In Fig. 1a nicht dargestellt ist die genaue Gestaltung der Spritzgussform 20 in Bezug auf die genaue Ausrichtung der Einschublänge der Membran 10 in die Form. Es wird jedoch sichergestellt, dass die an den Enden umspritzten Membranen jeweils nach der Durchführung des in Fig. 1a bis 1c dargestellten ersten Fertigungsschrittes dieselbe Gesamtlänge besitzen.

In der Spritzgussform 20 rückt ein Dorn 20a in des Lumen der Membran 10 ein, um zu verhindern, dass die Vergussmasse in das Lumen eintritt. Anschließend wird unter Druck Vergussmasse in die Form eingespritzt, wobei entsprechend der Darstellung in Fig. 1b die poröse Membran am Ende 10a zusammengepresst wird und von Vergussmasse 12 umgeben wird.

Nach dem Erkalten der Vergussmasse wird das umspritzte Membranende der Membran 10 aus der Spritzgussform 20 entnommen. Fig. 1c zeigt nur ein Membranende der Membran. Der Membranabschnitt mit der Umspritzung beider Enden wird im Folgenden als Premembran bezeichnet. Wie aus Fig. 1c ersichtlich ist, umgibt die Vergussmasse nicht nur die Außenseite der porösen Rohrmembran, sondern setzt sich zusätzlich auch in axialer Richtung der Rohrmembran fort. Daher ist im vorgeschalteten Schritt des Ablängens der Membranabschnitte zu berücksichtigen, dass die Premembran eine geringfügig größere Länge als der ursprünglich verwendete Membranabschnitt besitzt.

Wie aus Fig. 1c zudem ersichtlich ist, weist die Premembran 14 im Bereich des stirnseitigen Endes einen Abschnitt 14a auf, im Bereich dessen sich der freie Querschnitt des Lumens zum stirnseitigen Ende hin vergrößert.

Der zweite Fertigungsschritt nach Fig. 1d bis 1f betrifft die Verbindung der Premembran mit einem massiven Bauteil. Bei dem in Fig. 1d dargestellten Verfahrensschritt wird die Premembran bündig in eine Bohrung 16 eines Lochbodens eingeschoben. Unter bündig ist zu verstehen, dass sich die Premembran vollständig durch die Bohrung 16 erstreckt und die stirnseitige Abschlussfläche der Premembran bündig mit der Hauptfläche 15 des Lochbodens 18 abschließt. Die Bohrung im Lochboden ist so bemessen, dass die Premembran möglichst spielfrei, bevorzugt mit einer geringen Pressung in die Lochöffnung eingeschoben werden kann.

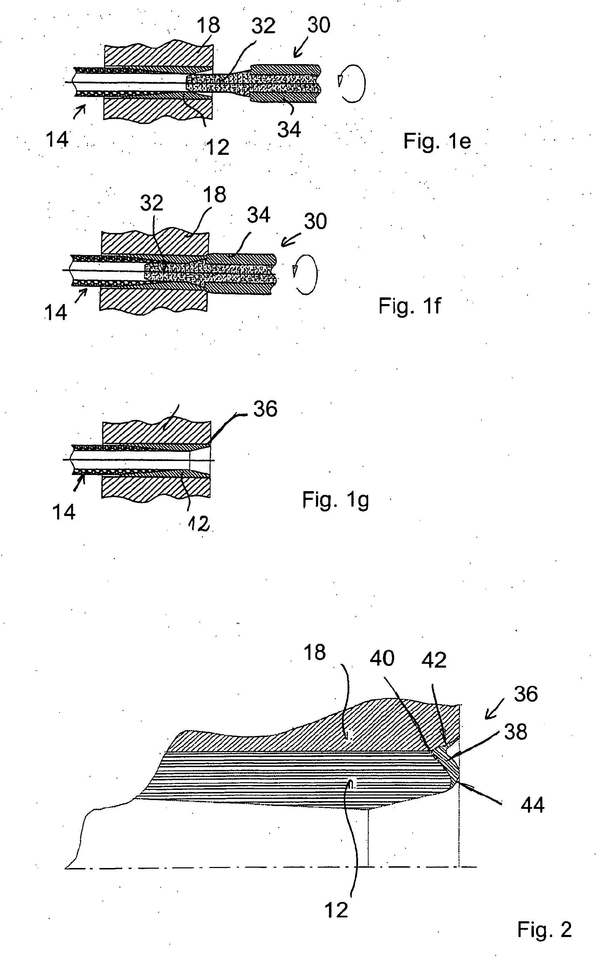

Nach dem Einschieben der Premembran 14 fährt gemäß Fig. 1e eine stehende oder rotierende Schweißformkontur 30 in die Premembran 14 von der stirnseitigen gemeinsamen Abschlussfläche der Premembran und des Lochbodens 18 her in das Lumen der Premembran ein. Die Schweißformkontur 30 wird in der Mitte durch einen wärmeisolierenden Stift 32 geführt, der aus einem keramischen oder ähnlichen Werkstoff bestehen kann. Ringförmig um den Stift herum ist als eigentliches Schweißwerkzeug der Schweißkopf 34 angeordnet.

Die Schweißformkontur 30 wird in den Lochboden 18 und in das umspritzte Material 12 der Premembran eingeschoben bis, wie in Fig. 1f dargestellt ist, der Schweißkopf 34 auf dem Kontaktbereich zwischen dem stirnseitigen Ende der Premembran und der Hauptfläche des Lochbodens 18 aufsteht. Aus Fig. 1f ist zudem ersichtlich, dass der Schweißkopf 34 auch in axialer Richtung soweit zugestellt wird, dass er geringfügig in den Kontaktbereich zwischen Premembran und Lochboden eindringt.

Der Schweißkopf 34 hat während dieses Verfahrensschrittes eine Temperatur kurz oberhalb der Schmelztemperatur des Vergussmaterials 12 der Premembran sowie des Materials des Lochbodens. Wenn, wie als ein Ausführungsbeispiel oben erwähnt wurde, sowohl die Rohrmembran wie auch das umspritzte Material 12 jeweils aus Polypropylen bestehen, bietet es sich an, auch einen Lochboden 18 aus Polypropylen zu verwenden. In diesem Fall würde der Schweißkopf auf eine Temperatur erhitzt werden, die kurz oberhalb der Schmelztemperatur von Polypropylen liegt. Das Erhitzen des Schweißkopfes kann sowohl elektrisch als auch durch Heißluft erfolgen.

Als Ergebnis des in Fig. 1f dargestellten Schweißvorganges entsteht eine dichte und feste Verbindung zwischen der Premembran 14 und einem Lochboden 18, wobei bei entsprechender Materialwahl auch eine Verbindung erzielt werden kann, die ausschließlich einen einzigen Werkstoff verwendet. Nach dem Herausziehen des Stiftes 32 der Schweißformkontur 30 aus dem Lumen der Premembran liegt eine in Fig. 1g dargestellte dichte und homogene Verbindung zwischen Premembran und Lochboden vor.

Die in Fig. 1g schematisch dargestellte Schweißnaht 36 ist in Fig. 2 in vergrößerter Darstellung gezeigt. Die Kontur der Schweißnaht ergibt sich aus der entsprechenden Geometrie des Schweißkopfes. Die Schweißnahtschmelze 38 wird durch die Plastifizierung in der Schweißzone des Lochbodens 18 erzeugt und durch eine stetige Schweißdruckaufbringung auf den Schweißkopf zu einer innigen Verschweißung 42 zwischen Lochboden 18 und dem angeformten Material 12 der Premembran von Außen nach Innen verschmolzen. Es muss ein ausreichender Schweißdruck aufgebracht werden, um in der Schweißwurzel 40 und im inneren Übergangsbereich (Kantenbereich) zwischen der Premembran und der Schweißnahtschmelze 38 den erforderlichen Massedruckschweißgut zu erzeugen.

Der verwendete Schweißkopf wird bevorzugt antiadhäsiv beschichtet und gleichzeitig so bewegt, dass eine saubere Schweißnaht 44 erzeugt wird. Dies kann erreicht werden, dass mit dem leichten Abheben des Schweißkopfes gleichzeitig dieser leicht gedreht wird. Hierdurch wird ohne Schweißzusatz eine homogene Verbindungsstruktur zwischen den beiden Thermoplasten der Premembran einerseits und des Lochbodens andererseits erzeugt, ohne dass eine Nachbearbeitung der Schweißnaht erforderlich ist.

Mit dem oben beschriebenen Verfahren lassen sich Membranfiltermodule herstellen, indem zwischen Lochböden mit einer Vielzahl von Bohrungen die wie oben beschrieben hergestellten Premembranen eingesetzt und mit den Lochböden verschweißt werden.

## Patentansprüche

1. Verfahren zum Verbinden einer porösen Membran, die einen inneren Hohlraum umschließt, mit einem massiven Bauteil, umfassend die Schritte:
(a) Anformen eines schmelzbaren, massiven Materials an ein oder beide längsseitigen Enden der Membran, wobei eine Premembran hergestellt wird;
(b) Einführen der im Schritt (a) hergestellten Premembran in eine Durchgangsöffnung des massiven Bauteils aus einem schmelzbaren Material, so dass die Stirnseite der Premembran bündig mit dem massiven Bauteil abschließt; und
(c) Verschweißen der Premembran mit dem massiven Bauteil.

2. Verfahren nach Anspruch 1,
**dadurch gekennzeichnet, dass**
im Schritt (a) die Außenseite der porösen Membran umspritzt wird.

3. Verfahren nach Anspruch 1 oder Anspruch 2
**dadurch gekennzeichnet, dass**
die Membran rohrförmig ist.

4. Verfahren nach einem der vorhergehenden Ansprüche,
**dadurch gekennzeichnet, dass**
die Membran ein Porenvolumen von mindestens 20% des Wandvolumens aufweist.

5. Verfahren nach einem der vorhergehenden Ansprüche,
**dadurch gekennzeichnet, dass**
die Membran aus Polyolefinen (allgemeiner PP, PE) besteht.

6. Verfahren nach einem der vorhergehenden Ansprüche,
**dadurch gekennzeichnet, dass**
im Schritt (c) eine Schweißvorrichtung eingesetzt wird, umfassend:
- einen Stift aus einem wärmeisolierenden Material, der dimensioniert ist, um von der Stirnseite der Premembran her in den Hohlraum der Premembran einführbar zu sein; und
- einen erhitzbaren Schweißkopf, der sich ringförmig um den Stift herum erstreckt.

7. Verfahren nach Anspruch 6,
**dadurch gekennzeichnet, dass**
der Schweißkopf im Schritt (c) auf eine Temperatur erhitzt wird, die oberhalb der Schmelztemperatur sowohl des im Schritt (a) verwendeten, schmelzbaren, massiven Materials als auch des Materials des massiven Bauteils liegt.

8. Verfahren nach Anspruch 6 oder Anspruch 7,
**dadurch gekennzeichnet, dass**
der Schweißkopf elektrisch oder mit Warmluft beheizbar ist.

9. Verfahren nach einem der Ansprüche 6 bis 8,
**dadurch gekennzeichnet, dass**
der Schweißkopf antiadhäsiv beschichtet ist.

10. Verfahren nach einem der Ansprüche 6 bis 9,
**dadurch gekennzeichnet, dass**
im Schritt (c) der Schweißkopf mit Druck gegen den Kontaktbereich zwischen Premembran und massiven Bauteil gedrückt wird.

11. Verfahren nach einem der Ansprüche 6 bis 10,
**dadurch gekennzeichnet, dass**
die Schweißvorrichtung zwangsrotierbar ist und beim Durchführen des Schritts (c) zumindest zeitweilig rotiert.

12. Verfahren nach einem der Ansprüche 6 bis 11,
**dadurch gekennzeichnet, dass**
der wärmeisolierende Stift der Schweißvorrichtung aus einem keramischen Material besteht.

13. Verfahren nach einem der vorhergehenden Ansprüche,
**dadurch gekennzeichnet, dass**
die Membran, das im Schritt (a) verwendete Material sowie das massive Bauteil jeweils aus einem Polyolefin bestehen.

14. Membranfiltermodul mit porösen Rohrmembranen sowie Lochböden, wobei die Verbindung zwischen den porösen Rohrmembranen und den Lochböden jeweils hergestellt ist unter Durchführung des Verfahrens nach einem der vorhergehenden Ansprüche.
